# EUROPEAN PATENT SPECIFICATION

(11) **EP 1 742 777 B1**
(45) Date of publication and mention of the grant of the patent: **13.02.2008**
(21) Application number: 04731377.0
(22) Date of filing: 06.05.2004
(51) Int. Cl.: B26B 21/22

(54) **RAZOR HEAD HAVING AN ADAPTER CAP MEMBER**
RASIERERKOPF MIT EINEM ADAPTERKAPPENELEMENT
TETE DE RASOIR PRESENTANT UN ELEMENT DE PROTECTION D'ADAPTATEUR

(43) Date of publication of application: 17.01.2007
(73) Proprietor: BIC Violex S.A., 145 69 Anixi, Attiki (GR)
(72) Inventor: GRATSIAS, Spiros, Kypseli-Athens, GR-11363 Attiki (GR); BOSIKIS, Ioannis, Koukaki-Athens, gr-11741 Attiki (GR); EFTHIMIADIS, Dimitris, Athens, GR-11476 Attiki (GR)
(74) Representative: Burbaud, Eric
(86) International application number: PCT/EP2004/005742
(87) International publication number: WO 2005/108022

(56) References cited:
- EP-A- 0 858 869
- US-A- 3 769 117
- US-A- 4 026 016
- US-A- 5 253 420
- US-A- 5 461 781

## Description

### Field of the invention

The invention relates to safety razors.

### Background of the invention

International application No. WO 00/16951 to Gratsias discloses a razor cartridge comprising a razor blade carrier having a carrier engagement member thereon, and an adapter unit having a first side having an adapter engagement member lockingly mateable with the carrier engagement member, and a second side having means for attachably mating the razor cartridge with a handle engagement member.

Such a razor cartridge is satisfactory.

### Summary of the invention

It is an object of the invention to provide an improved razor cartridge or blade unit.

It is also an object of the invention to provide a razor blade unit, the producing of which is simpler.

The razor blade unit according to the invention comprises guard member, a blade unit attached to said guard member, and an adapter mateable with a razor handle, wherein said adapter forms a cap member which is secured onto the guard member on the same side as the blade unit. Such a razor blade unit is also disclosed for example in US-A-4,813,137.

Producing such a razor blade unit is simpler, for the blade assembly and the adapter are provided on the same side of the base member.

The guard member and the cap member may together form a closed internal volume in which the blade unit is disposed.

The guard member has for instance an internal surface and a peripheral wall defining together said internal volume in which the blade unit is disposed, and the cap member is welded onto the edge of said peripheral wall, thereby closing said internal volume.

The cap member may be laser welded to said guard member.

According to a further aspect of the invention, there is provided a razor comprising :
- a razor handle having a handle end, and
- a razor head according to the features of claim 1.

The above and other objects and advantages of the invention will become apparent from the detailed description of a preferred embodiment of the invention, considered in conjunction with the accompanying drawings.

### Brief description of the drawings

Figure 1 is a perspective view of a razor head comprising three blades.
Figure 2 is a perspective view of the razor head of figure 1, from a different point of view.
Figure 3 is an exploded perspective view of the razor head of figures 1 and 2, form the same point of view as in figure 2.

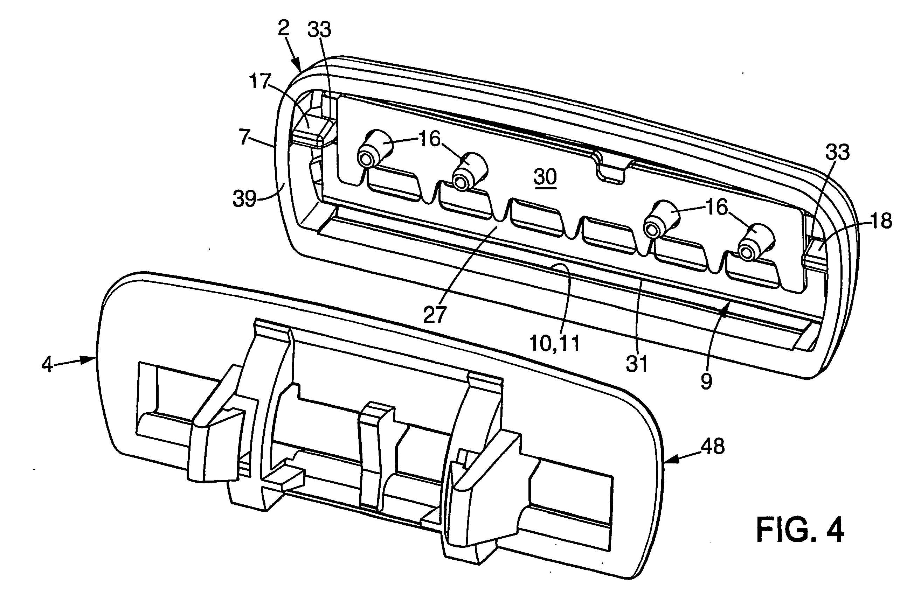

Figure 4 is a perspective view of the razor head of figures 1, 2 and 3, in a partially assembled state.
Figure 5 is a cut-view of the razor head of the preceding figures, showing laser welding thereof.
Figure 6 is a top plan view of a platform guard of the razor head of the preceding figures.

A razor head according to the invention is indicated generally by reference number 1 in the drawings.

Razor head 1 comprises a guard member 2, thereafter called platform guard, a blade assembly 3 which is mounted and secured to the platform guard 2, and a platform rear cap 4 having latching means 5 for connection to a handle end.

Platform guard 2 has a substantially rectangular shape and comprises a flat base member 6 and a peripheral wall 7 projecting substantially perpendicular from the base member 6.

Peripheral wall 7 and base member 6 together define an internal volume 8 wherein blade assembly 3 is lodged during mounting of the razor head 1, as described hereinafter.

Platform guard 2 is provided with a rectangular shaped opening 9 which runs along the base member 6, thereby defining on the side opposite thereof a guard bar 10 in a straight peripheral wall portion 11.

Base member 6 has a substantially flat lower or internal surface 12, which is oriented towards the internal volume 8, and an opposite external or top surface 13.

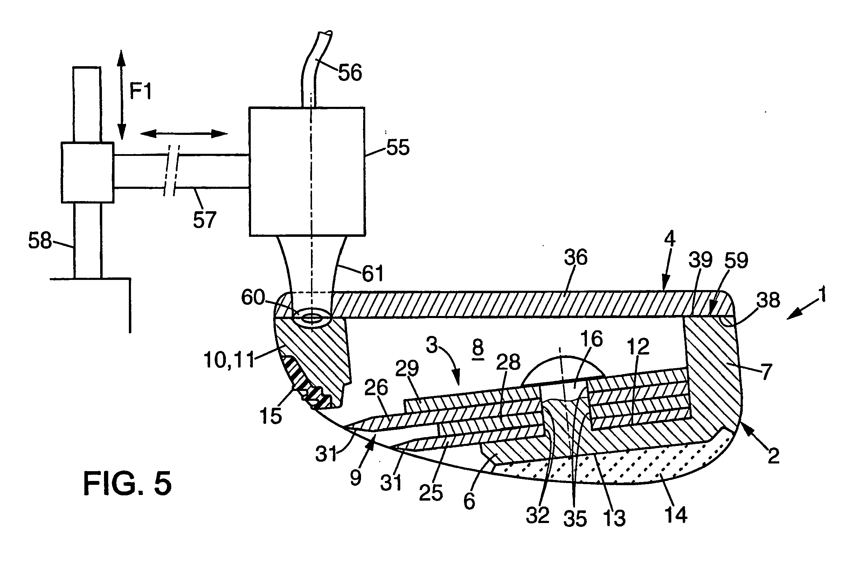

As depicted on figure 5, the razor head 1 is provided with a lube strip 14 which is glued to or co-injected together with the platform guard 2 onto the top surface 13, and with a skin contacting element 15 which is also glued to or co-injected together with the platform guard 2 onto the guard bar 10.

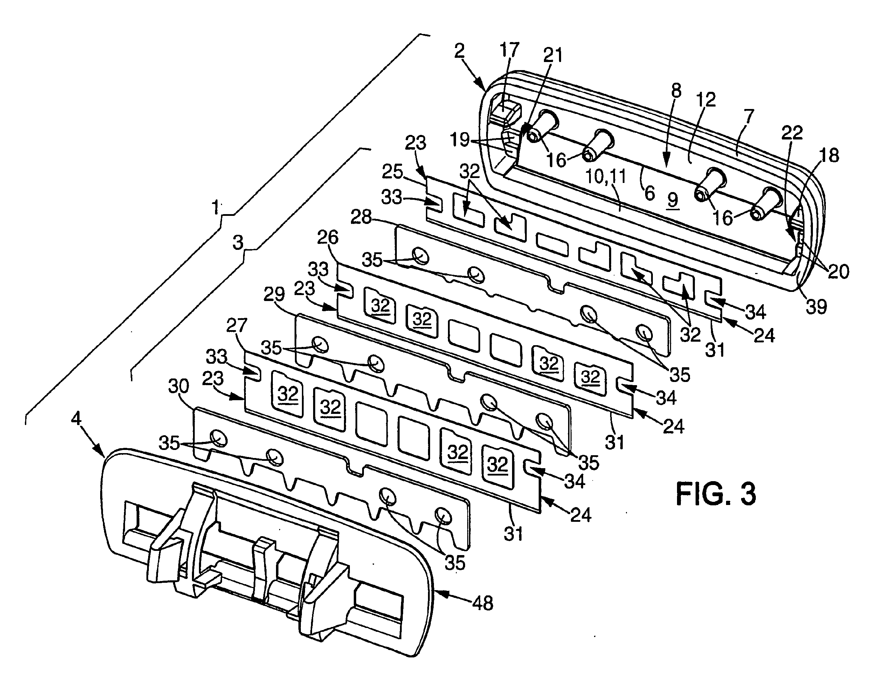

Platform guard 2 is provided with at least two securing pins 16 projecting substantially perpendicular from internal surface 12. As illustrated in figure 3, four securing pins 16 are preferably provided.

As depicted on figure 3, platform guard 2 is also provided with two positioning pins 17, 18, which are located opposite from one another at the junction between the peripheral wall 7 and the base member 6. Besides, platform guard 2 is provided with a tapered surface 19, 20 at each end 21, 22 of the rectangular opening 9, for receiving opposite ends 23, 24 of the blades.

Blade assembly 3 comprises at least one blade and one securing plate. In a preferred embodiment depicted on figure 3, blade assembly 3 comprises three blades 25, 26, 27, two spacers 28, 29 and a securing plate 30.

More precisely, blade assembly 3 comprises a narrow or primary blade 25, a narrow or primary spacer 28, an intermediate or secondary blade 26, an intermediate or secondary spacer 29, a wide or tertiary blade 27, and finally a securing plate 30.

Each blade 25, 26, 27 is formed of a stamped metal strip, a side of which was grinded to form a blade edge 31.

Each blade 25, 26, 27 is also provided with securing apertures 32 which are capable of cooperating with securing pins 16. Each blade 25, 26, 27 has two opposite ends 23, 24, which are provided with rectangular shaped cut-outs 33, 34 capable of cooperating with positioning pins 17, 18.

Correspondingly, the spacers 28, 29 and the securing plate 30, which are formed of a metal or plastic strip, are provided with holes 35 capable of cooperating with the securing pins 16. As will be seen thereafter, each spacer 28, 29 can be used as a securing plate 30 to be mounted onto the last blade.

Platform rear cap 4 comprises a substantially rectangular body 36 having the same contour as the platform guard 2.

A rectangular opening 37 is provided in the body 36, which has a flat rim 38 capable of cooperating with a top surface 39 of the peripheral wall 7 of the platform guard 2, as described hereinafter.

The platform rear cap 4 forms and adaptor mateable with a razor handle.

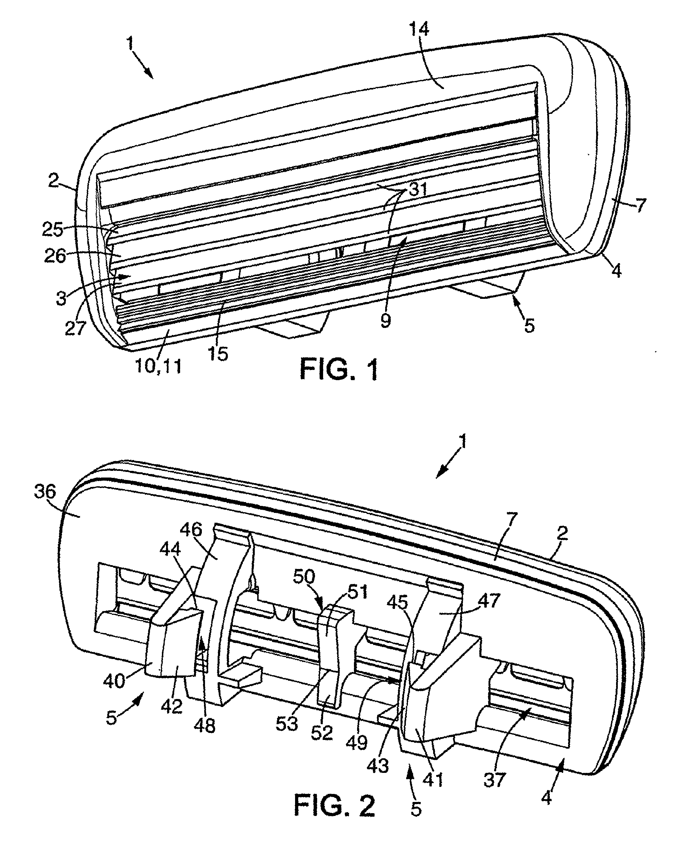

As depicted on figure 2, platform rear cap 4 is provided, on the side opposite to the platform guard 2, with two projecting retainers 40, 41 having, at their free ends, respectively, inwardly extending opposed rails 42, 43, each rail 42, 43 having a respective arcuate upper surface 44, 45 which faces a corresponding cylindrical surface 46, 47.

Rails 42, 43, in conjunction with corresponding cylindrical surfaces 46, 47, define arcuate slots 48, 49 which are adapted to receive shell bearings of a razor handle end on which the razor head 1 will be pivotally and removably attached through the platform rear cap 4.

In the middle of the retainers 40, 41, the platform rear cap 4 comprises cam means 50 in the form of a strut which extends substantially perpendicular through the opening 37, the strut 50 comprising cam surfaces 51, 52 joining at an apex 53, the surfaces 51, 52 defining therebetween an obtuse angle. Cam means 50 is adapted to receive a cam follower operative to urge the razor head 1 to a given rest position with respect to the razor handle.

Attachment of the razor head 1 to a handle end is described in further details in US patent nr. 4,492,025, the whole content of which is herewith incorporated by reference.

A method of producing a razor head 1 according to the invention is described hereinafter.

Such a method comprises the steps of:
- providing platform guard 2;
- securing blade assembly 3 onto the platform guard 2;
- providing platform rear cap 4;
- securing the platform rear cap 4 to the platform guard 2 on the same side as the blade assembly 3.

Depending on the number of blades in the blade assembly 3, several embodiments are provided for carrying the step of securing the blade assembly 3 onto the platform guard 2.

### One blade

In a razor head 1 having one blade 25 only, the step of securing the blade assembly 3 onto the platform guard 2 comprises the steps of:
- providing the blade 25 with the securing apertures 32 and the cut-outs 33, 34 in alignment with the securing pins 16 and the positioning pins 17, 18, respectively;
- mounting the blade 25 onto the platform guard 2, the blade 25 abutting against the internal surface 12 of the base member 6, the securing pins 16 passing through the securing apertures 32, the positioning pins 17, 18 cooperating with the cut-outs 33, 34, the blade ends 23, 24 abutting against tapered surfaces 19, 20 and the blade edge 31 extending through and along the rectangular opening 9 in the platform guard 2;
- providing a securing plate (i.e. spacer 28) with the holes 35 thereof in alignment with the securing pins 16;
- mounting the securing plate 28 onto the platform guard 2, over the blade 25;
- forming a crimping head 54 at one end of each securing pin 16, thereby riveting the one-blade assembly 3 onto the platform guard 2.

### Two blades

In a razor head 1 having two blades 26, 27 (as depicted on figure 5), the step of securing the blade assembly 3 onto the platform guard 2 comprises the steps of:
- providing a narrow or primary blade 25 with the securing apertures 32 and the cut-outs 33, 34 in alignment with the securing pins 16 and the positioning pins 17, 18, respectively;
- mounting the primary blade 25 onto the platform guard 2, the blade 25 abutting against the internal surface 12 of the base member 6, the securing pins 16 passing through the securing apertures 32, the positioning pins 17, 18 cooperating with the cut-outs 33, 34, the blade ends 23, 24 abutting against tapered surfaces 19, 20 and the blade edge 31 extending through and along the rectangular opening 9 in the platform guard 2;
- providing a primary spacer 28 with the holes 35 in alignment with the securing pins 16;
- mounting the primary spacer 28 onto the platform guard 2 over the primary blade 25, the securing pins 16 passing through the holes 35 of the primary spacer 28;
- providing a secondary blade 26, the securing apertures 32 and the cut-outs 33, 34 being in alignment with the securing pins 16 and the positioning pins 17, 18, respectively;
- mounting the secondary blade 26 onto the platform guard 2 over the primary spacer 28, the securing pins 16 passing through the securing apertures 32, the positioning pins 17, 18 cooperating with the cut-outs 33, 34, the blade ends 23, 24 abutting against tapered surfaces 19, 20, and the blade edge 31 extending through and along the rectangular opening 9 provided in the platform guard 2;
- providing a securing plate (i.e. spacer 29) with holes 35 in alignment with the securing pins 16;
- mounting the securing plate 29 onto the platform guard 2 over the secondary blade 26;
- forming a crimping head 54 at one end of each securing pin 16, thereby riveting the two-blade assembly 3 onto the platform guard 2.

### Three blades (preferred)

In a razor head 1 having three blades 25, 26, 27 (depicted on figure 3), the step of securing the blade assembly 3 onto the platform guard 2 comprises the steps of:
- providing a narrow or primary blade 25 with the securing apertures 32 and the cut-outs 33, 34 in alignment with the securing pins 16 and the positioning pins 17, 18, respectively;
- mounting the primary blade 25 onto the platform guard 2, the blade 25 abutting against the internal surface 12 of the base member 6, the securing pins 16 passing through the securing apertures 32, the positioning pins 17, 18 cooperating with the cut-buts 33, 34, the blade ends 23, 24 abutting against tapered surfaces 19, 20 and the blade edge 31 extending through and along the rectangular opening 9 in the platform guard 2;
- providing a primary spacer 28 with the holes 35 in alignment with the securing pins 16;
- mounting the primary spacer 28 onto the platform guard 2 over the primary blade 25, the securing pins 16 passing through the holes 35 of the primary spacer 28;
- providing a secondary blade 26, the securing apertures 32 and the cut-outs 33, 34 being in alignment with the securing pins 16 and the positioning pins 17, 18, respectively;
- mounting the secondary blade 26 onto the platform guard 2 over the primary spacer 28, the securing pins 16 passing through the securing apertures 32, the positioning pins 17, 18 cooperating with the cut-outs 33, 34, the blade ends 23, 24 abutting against tapered surfaces 19, 20, and the blade edge 31 extending through and along the rectangular opening 9 provided in the platform guard 2;
- providing a wide or tertiary blade 27 with the securing apertures 32 and the cut-outs 33, 34 in alignment with the securing pins 16 and the positioning pins 17, 18, respectively;
- mounting the tertiary blade 27 onto the platform guard 2 over the secondary spacer 29, the securing pins 16 passing through the securing apertures 32, the positioning pins 17, 18 cooperating with the cut-outs 33, 34, the blade ends 23, 24 abutting against tapered surfaces 19, 20 and the blade edge 31 extending through and along the rectangular opening 9 provided in the platform guard 2;
- providing a securing plate 30 with holes 35 in alignment with the securing pins 16;
- mounting the securing plate 30 onto the platform guard 2 over the tertiary blade 27;
- forming a crimping head 54 at one end of each securing pin 16, thereby riveting the three-blade assembly 3 onto the platform guard 2.

### Four blades

In a razor head having four blades, the step of securing the blade assembly onto the platform guard comprises the steps of:
- providing a narrow or primary blade with the securing apertures and the cut-outs in alignment with the securing pins and the positioning pins, respectively;
- mounting the primary blade onto the platform guard, the blade abutting against the internal surface of the base member, the securing pins passing through the securing apertures, the positioning pins cooperating with the cut-outs, the blade ends abutting against tapered surfaces and the blade edge extending through the rectangular opening in the platform guard;
- providing a primary spacer with the holes in alignment with the securing pins;
- mounting the primary spacer onto the platform guard over the primary blade, the securing pins passing through the holes of the primary spacer;
- providing a secondary blade, the securing apertures and the cut-outs being in alignment with the securing pins and the positioning pins, respectively;
- mounting the secondary blade onto the platform guard over the primary spacer, the securing pins passing through the securing apertures, the positioning pins cooperating with the cut-outs, the blade ends abutting against tapered surfaces and the blade edge extending through the rectangular opening provided in the platform guard;
- providing a wide or tertiary blade with the securing apertures and the cut-outs in alignment with the securing pins and the positioning pins, respectively;
- mounting the tertiary blade onto the platform guard over the secondary spacer, the securing pins passing through the securing apertures, the positioning pins cooperating with the cut-outs, the blade ends abutting against tapered surfaces and the blade edge extending through the rectangular opening provided in the platform guard;
- providing a tertiary spacer with holes in alignment with the securing pins;
- mounting the tertiary spacer onto the platform guard over the tertiary blade;
- providing a fourth blade, wider than the tertiary blade, the securing apertures and the cut-outs of the fourth blade being in alignment with the securing pins and the positioning pins, respectively;
- mounting the fourth blade onto the platform guard over the tertiary spacer, the securing pins passing through the securing apertures, the positioning pins cooperating with the cut-outs, the blade ends abutting against tapered surfaces and the blade edge extending through the rectangular opening in the platform guard;
- providing a securing plate with holes in alignment with the securing pins;
- mounting the securing plate onto the platform guard, the securing pins passing through the holes;
- forming a crimping head at one end of each securing pins, thereby riveting the blade assembly onto the platform guard.

Accordingly, no matter the number of blades, the step of riveting the blade assembly 3 to the platform guard 2 is achieved before the step of mounting the platform rear cap 4. In other words, the blade assembly 3 is fixed to the platform guard 2 separately and independently from the platform rear cap 4, so that, in case an accidental separation of the platform rear cap 4 from the platform guard 2 occurs, scattering of the blades is avoided.

In addition, since the blade assembly 3 is fixed to the platform guard 2 independently from the platform rear cap 4, it is possible to strongly fix the latter to the platform guard 2, as described hereinafter.

Furthermore, since the securing pins 16 hold the blade assembly 3 only, which is sandwiched by the securing plate, the securing pins are shorter than the ordinary ones, so that they are stronger and there is less risk that the blades be accidentally detached from the platform guard 2.

As illustrated in figures 2 and 5, the platform rear cap 4 forms a cover which, when secured onto the platform guard 2, closes the internal volume 8 wherein the blade assembly 3 is unreachably lodged.

Of course, the thickness of the platform guard 2, i.e. the height of the peripheral wall 7, shall be adapted to the thickness of the blade assembly 3, depending on the number of blades.

As depicted on figure 5, after the blade assembly 3 has been riveted, the crimping heads 54 do not project outside from the internal volume 8 of the platform guard 2, so that when mounted onto the platform guard 2, the platform rear cap 4 is not prevented from abutting against the peripheral wall 7 of the platform guard 2.

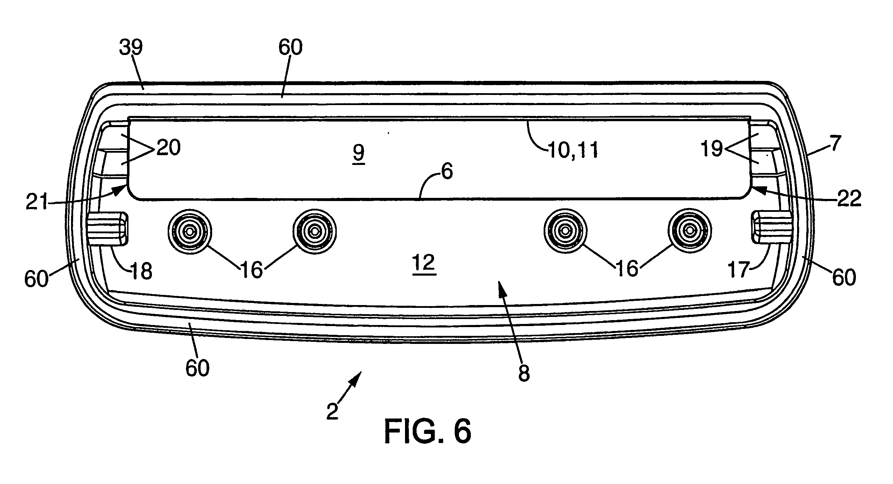

As further depicted on figure 5, the platform rear cap 4 is laser welded onto the platform guard 2. There is provided a laser source which is connected to a laser welding head 55 through a flexible laser beam guiding element 56. The laser welding head 55 is mounted onto an arm 57 which is, in turn, slidingly mounted on a clamping element 58 in a direction perpendicular to an interface 59 between the platform rear cap 4 and the platform guard 2, as shown by arrow F1. Moreover, the laser welding head 55 is slideable, with respect of the clamping element 58, in both directions in a plan substantially parallel to the interface 59 between the platform rear cap 4 and the platform guard 2, so that the laser welding head 55 can move along a predetermined welding path 60 illustrated in figure 6, which follows the contour of the peripheral wall 7.

In a preferred embodiment illustrated in figure 5, platform guard 2 is mounted on the bottom side of the assembly, while the platform rear cap 4 is mounted on the top thereof. As a laser beam 61 comes from the top, the platform rear cap 4 and the platform guard 2 have to be made of suitable polymers in order to allow laser welding. In this particular case, platform rear cap 4 has to be transparent to the laser beam 61 while platform guard 2 has, on the contrary, to be absorbing. As the laser wave length is outside the visible range, both pieces 2, 4 may be dyed according to the wishes of the manufacturer, provided that they present sufficient transparency and opacity to the laser beam 61, respectively.

Besides, the interface 59 formed by overlapping of the platform rear cap 4 and the platform guard 2 (i.e. by conjunction of rim 38 and top surface 39) must be of sufficient area to prevent the welding path or melting zone 60 from reaching the edges of the interface 59.

The laser welding method is described in further details in US patent nr. 6,201,211, the whole content of which is herewith incorporated by reference.

As described here above, this welding method is used to laser weld the platform rear cap 4 to the platform guard 2, since there is a need for strongly securing both pieces 2, 4 to each other in order to avoid separation during shaving, which could injury the user's face (or other body areas to be shaved). There is also a need for preventing a child who would be playing with the razor from easily separating the platform rear cap 4 from the platform guard, thereby easily accessing the blades.

Laser welding could also be used to weld other plastic parts of the razor, which need to be strongly secured together.

For instance, in a razor having a handle comprising several plastic parts, the method of producing the razor according to the invention comprises a step of laser welding together at least two plastic parts of the handle.

The technique of laser welding may be the same as previously recited. Therefore, one of the plastic part has to be transparent in order to allow transmission of the laser beam, while the other part has to be absorbing.

The one part may be an upper member of the handle and the other a lower member, the upper and the lower members being laser welded together to form the whole handle.

A decorative insert (e.g. for an advertising purpose) may be sandwiched between the upper and the lower members, the insert being visible through the transparent upper member.

## Claims

1. Razor head (1) comprising a guard member (2), a blade unit (3) attached to said guard member (2), and an adapter (4) mateable with a razor handle,
wherein said adapter (4) forms a cap member which is secured onto the guard member (2) on the same side as the blade unit (3),
**characterized in that** the blade unit (3) is fixed to the guard member (2) separately and independently from the cap member (4).

2. Razor head (1) according to claim 1, wherein said guard member (2) and cap member (4) together form a closed internal volume (8) in which the blade unit (3) is disposed.

3. Razor head (1) according to claim 2, wherein said guard member (2) has an internal surface (12) and a peripheral wall (7) defining together said internal volume (8) in which the blade unit (3) is disposed, and wherein the cap member (4) is welded onto the edge (39) of said peripheral wall (7), thereby closing said internal volume (8).

4. Razor head (1) according to any of claims 1 to 3, wherein said cap member (4) is laser welded to said guard member (2).

5. Razor comprising:
- a razor handle having a handle end, and
- a razor head (1) according to anyone of claims 1 to 4,
wherein said cap member (4) is an adapter pivotally mateable with said handle end.

6. Razor comprising:
- a razor handle having a handle end, and
- a. razor head (1) according to anyone of claims 1 to 4,
wherein said cap member (4) is an adapter mateable with said handle end.

7. Razor comprising a razor handle having a handle end and a razor head (1) according to anyone of claims 1 to 4.

## Patentansprüche

1. Rasiererkopf (1), ein Schutzelement (2), eine am Schutzelement (2) befestigte Klingeneinheit (3) und einen Adapter (4) zum Anstecken des Rasiererhandgriffs umfassend,
wobei der Adapter (4) ein Abdeckelement bildet, das auf dem Schutzelement (2) auf derselben Seite wie die Klingeneinheit (3) befestigt ist,
**dadurch gekennzeichnet, dass** die Klingeneinheit (3) am Schutzelement (2) getrennt und unabhängig vom Abdeckelement (4) befestigt ist.

2. Rasiererkopf (1) gemäß Anspruch 1, wobei das Schutzelement (2) und das Abdeckelement (4) zusammen einen geschlossenen Innenraum (8) bilden, in dem die Klingeneinheit (3) angeordnet ist.

3. Rasiererkopf (1) gemäß Anspruch 2, wobei das Schutzelement (2) eine Innenfläche (12) und eine umlaufende Wand (7) aufweist, die zusammen den Innenraum (8) definieren, in dem die Klingeneinheit (3) angeordnet ist, und wobei das Abdeckelement (4) an der Kante (39) der umlaufenden Wand (7) angeschweißt ist, um den Innenraum (8) abzuschließen.

4. Rasiererkopf (1) gemäß einem der Ansprüche 1 - 3, wobei das Abdeckelement (4) an dem Schutzelement (2) laserangeschweißt ist.

5. Rasierer umfassend:
einen Rasiererhandgriff mit einem Griffende, und
einen Rasiererkopf (1) gemäß einem der Ansprüsche 1-4, wobei das Abdeckelement (4) ein Adapter ist, der gelenkig am Handgriffende ansteckbar ist.

6. Rasierer umfassend:
einen Rasiererhandgriff mit einem Griffende und
einen Rasiererkopf (1) gemäß einem der Ansprüsche 1-4, wobei das Abdeckelement (4) ein Adapter ist, der am Handgriffende ansteckbar ist.

7. Rasierer, einen Rasiererhandgriff mit einem Handgriffende und einen Rasiererkopf (1) gemäß einem der Ansprüche 1 bis 4 umfassend.

## Revendications

1. Tête (1) de rasoir comprenant un élément protecteur (2), une unité de lames (3) fixée audit élément protecteur (2), et un adaptateur (4) pouvant s'ajuster sur un manche de rasoir,
ledit adaptateur (4) formant un capuchon fixé sur l'élément protecteur (2), du même côté que l'unité de lames (3),
**caractérisée en ce que** l'unité de lames (3) est fixée à l'élément protecteur (2) d'une manière séparée et indépendante du capuchon (4).

2. Tête (1) de rasoir selon la revendication 1, dans laquelle lesdits élément protecteur (2) et capuchon (4) forment conjointement un volume intérieur clos (8) dans lequel est disposée l'unité de lames (3).

3. Tête (1) de rasoir selon la revendication 2, dans laquelle ledit élément protecteur (2) a une surface intérieure (12) et une paroi périphérique (7) définissant conjointement ledit volume intérieur (8) dans lequel est disposée l'unité de lames (3), et dans laquelle le capuchon (4) est soudé sur bord (39) de ladite paroi périphérique (7), en fermant de ce fait ledit volume intérieur (8).

4. Tête (1) de rasoir selon l'une quelconque des revendications 1 à 3, dans laquelle ledit capuchon (4) est soudé par laser audit élément protecteur (2).

5. Rasoir, comprenant :
- un manche de rasoir ayant une extrémité de manche, et
- une tête (1) de rasoir selon l'une quelconque des revendications 1 à 4,
dans lequel ledit capuchon (4) est un adaptateur ajustable de manière pivotante sur ladite extrémité du manche.

6. Rasoir, comprenant :
- un manche de rasoir ayant une extrémité de manche, et
- une tête (1) de rasoir selon l'une quelconque des revendications 1 à 4,
dans lequel ledit capuchon (4) est un adaptateur ajustable sur ladite extrémité du manche.

7. Rasoir comprenant un manche de rasoir comportant une extrémité de manche et une tête (1) de rasoir selon l'une quelconque des revendications 1 à 4.
